(19) Europäisches Patentamt / European Patent Office / Office européen des brevets

(11) **EP 3 742 536 A1**

## (12) EUROPEAN PATENT APPLICATION

(43) Date of publication:
**25.11.2020 Bulletin 2020/48**

(21) Application number: **19201901.6**

(22) Date of filing: **08.10.2019**

(51) Int Cl.:
**H01M 10/0562** (2010.01)   **H01M 10/0525** (2010.01)
**H01M 10/0585** (2010.01)   **H01M 4/04** (2006.01)
**H01M 10/04** (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.05.2019 KR 20190060496**

(71) Applicants:
• **HYUNDAI MOTOR COMPANY**
  **Seoul 06797 (KR)**
• **Kia Motors Corporation**
  **Seoul 06797 (KR)**

(72) Inventors:
• CHOI, Yong Seok
  18280 Hwaseong-si, Gyeonggi-do (KR)
• LIM, Jae Min
  18280 Hwaseong-si, Gyeonggi-do (KR)
• BYUN, Soon Chul
  18280 Hwaseong-si, Gyeonggi-do (KR)
• SONG, In Woo
  18280 Hwaseong-si, Gyeonggi-do (KR)
• KIM, Yun Sung
  18280 Hwaseong-si, Gyeonggi-do (KR)

(74) Representative: **Viering, Jentschura & Partner mbB**
**Patent- und Rechtsanwälte**
**Am Brauhaus 8**
**01099 Dresden (DE)**

(54) **ALL-SOLID-STATE BATTERY HAVING HIGH ENERGY DENSITY AND METHOD OF MANUFACTURING SAME**

(57)    In manufacturing an all-solid-state battery, a cell assembly is pressurized rather than pressurizing each cell unit, and the structure of the battery is simplified by using a reduced number of first electrode current collectors and second electrode current collectors. In particular, the all-solid-state battery includes: first units each including a first electrode current collector and a first electrode active material layer provided on each of opposite surfaces of the first electrode current collector; second units each including a second electrode current collector and a second electrode active material layer provided on each of opposite surfaces of the second electrode current collector; and a solid electrolyte layer disposed between a corresponding first unit and a corresponding second unit.

**Fig. 1**

EP 3 742 536 A1

## Description

FIELD

The present disclosure relates to an all-solid-state battery having high energy density and a method of manufacturing the same.

BACKGROUND

The statements in this section merely provide background information related to the present disclosure and may not constitute prior art.

Rechargeable secondary batteries are used not only for small electronic devices such as mobile phones and laptop computers, but also for large-sized motor vehicles such as hybrid vehicles and electric vehicles. Accordingly, it is desired to develop secondary batteries having high stability and high energy density.

Secondary batteries in the related art constitute cells on the basis of an organic solvent (organic liquid electrolyte) mostly, and thus secondary batteries have limitations in improving stability and energy density.

All-solid-state batteries using inorganic solid electrolytes are based on a technique that excludes organic solvents, and thus all-solid-state batteries have attracted attention in recent years because cells can be manufactured in a simple form in a safe way.

However, we have discovered that all-solid-state batteries have a limitation in that actual energy density and output thereof may not reach those of lithium ion batteries using liquid electrolytes. All-solid-state batteries have electrolyte membranes including solid electrolytes between positive and negative electrodes and thus are bulky and heavy compared with lithium-ion batteries in the related art. Accordingly, all-solid-state batteries have low energy per volume and low energy density per weight. When the electrolyte membranes are made thin to prevent this, a short circuit may occur between the positive and negative electrodes.

As a result, it has been desired to simplify the process of manufacturing all-solid-state batteries and develop all-solid-batteries having high stability and energy density.

SUMMARY

The present disclosure provides an all-solid-state battery having high stability and high energy density while exhibiting the original function of a rechargeable secondary battery.

It is another objective of the present disclosure to provide a method of manufacturing an all-solid-state battery efficiently, the method to inhibit or prevent a short circuit at edges of electrodes through a simple process such as a size adjustment of a solid electrolyte layer.

Objectives of the present disclosure are not limited to the objectives described above. These and other objectives of the present disclosure may be understood from the following detailed description and will become more fully apparent from the forms of the present disclosure. Also, the objectives of the present disclosure may be realized by the means shown in the appended claims and combinations thereof.

In one form of the present disclosure, an all-solid-state battery includes: a plurality of first units each including a first electrode current collector and a first electrode active material layer provided on each of opposite surfaces of the first electrode current collector; and a plurality of second units each including a second electrode current collector and a second electrode active material layer provided on each of opposite surfaces of the second electrode current collector. First units of the plurality of first units and second units of the plurality of second units are alternately stacked on one another. A solid electrolyte layer, among a plurality of solid electrolyte layers, is disposed between a corresponding first unit among the plurality of first units and a corresponding second unit among the plurality of second units. Each solid electrolyte layer of the plurality of solid electrolyte layers has an area larger than each of the first units and equal to or larger than each of the second units.

The corresponding first unit may have an area equal to or larger than the corresponding second unit.

One of the corresponding first unit and second unit may be seated on one surface of the solid electrolyte layer, and a remaining one of the corresponding first unit and second unit which is different from the one seated on the one surface is seated on an opposite surface of the solid electrolyte layer such that the first electrode active material layer and the second electrode active material layer are stacked to contact with the solid electrolyte layer.

A central portion of the solid electrolyte layer may have an area equal to or larger than the corresponding first unit or the corresponding second unit.

The all-solid-state battery may satisfy Equation 1 or Equation 2 below:

$$\text{Equation 1:}$$
$$2 < \log(x_1 y) < 6,$$

$$\text{Equation 2:}$$
$$2 < \log(x_2 y) < 6,$$

wherein $x_1$ is a distance between an edge of the solid electrolyte layer and an edge of the first unit, $x_2$ is a distance between the edge of the solid electrolyte layer and an edge of the second unit, and $y$ is a thickness of the solid electrolyte layer.

A thickness ($y$) of the solid electrolyte layer may be approximately 10 $\mu$m to 500 $\mu$m.

A distance ($x_1$) between an edge of the solid electrolyte layer and an edge of the corresponding first unit or a distance ($x_2$) between the edge of the solid electrolyte layer and an edge of the corresponding second unit may be approximately 10 $\mu$m to 2000 $\mu$m.

The edge of the solid electrolyte layer and the edge of the corresponding first unit may be parallel to each other, and

The edge of the solid electrolyte layer and the edge of the corresponding second unit may be parallel to each other.

In one form, the first electrode current collector of the corresponding first unit has a thickness of approximately 4 $\mu$m to 20 $\mu$m and is disposed between a pair of first electrode active material layers of the corresponding first unit.

In another form, the second electrode current collector of the corresponding second unit has a thickness of approximately 5 $\mu$m to 20 $\mu$m and is disposed between a pair of second electrode active material layers of the corresponding second unit.

The first electrode active material layer may have a thickness of approximately 50 $\mu$m to 300 $\mu$m, a composite density of approximately 1.2 g/cc to 3.5 g/cc, a loading level of approximately 10 mg/cm$^2$ to 45 mg/cm$^2$, and a brightness index of approximately 30 to 80.

The second electrode active material layer may have a thickness of approximately 50 $\mu$m to 300 $\mu$m, a composite density of approximately 2.5 g/cc to 5.0 g/cc, a loading level of approximately 10 mg/cm$^2$ to 35 mg/cm$^2$, and a brightness index of approximately 40 to 90.

In another form of the present disclosure, a method of manufacturing an all-solid-state battery includes: preparing multiple first units each including a first electrode current collector and a first electrode active material layer provided on each of opposite surfaces of the first electrode current collector; preparing multiple second units each including a second electrode current collector and a second electrode active material layer provided on each of opposite surfaces of the second electrode current collector; preparing a cell assembly by alternately stacking first units of the multiple first units and second units of the multiple second units on one another; and pressurizing the cell assembly. The preparing of the cell assembly further includes: disposing a solid electrolyte layer between a first unit of the first units and a second unit of the second units, where the solid electrolyte layer has a release film on a first surface thereof. The solid electrolyte layer has an area larger than any of the first unit and each of the second unit.

The disposing of the solid electrolyte layer between the first unit and the second unit may include: stacking one unit among the first unit and the second unit on a second surface of the solid electrolyte layer to which the release film is not attached; removing the release film from the first surface of the solid electrolyte layer; and stacking a remaining unit, among the first unit and the second unit, on the first surface from which the release film.

The method may further includes: arranging the solid electrolyte layer, first unit and the second unit to satisfy Equation 1 or Equation 2 below:

$$\text{Equation 1:}$$

$$2 < \log(x_1 y) < 6,$$

$$\text{Equation 2:}$$

$$2 < \log(x_2 y) < 6,$$

wherein $x_1$ is a distance between an edge of the solid electrolyte layer and an edge of the first unit, $x_2$ is a distance between the edge of the solid electrolyte layer and an edge of the second unit, and $y$ is a thickness of the solid electrolyte layer.

A thickness ($y$) of the solid electrolyte layer is approximately 10 $\mu$m to 500 $\mu$m.

A distance ($x_1$) between an edge of the solid electrolyte layer and an edge of the first unit or a distance ($x_2$) between the edge of the solid electrolyte layer and an edge of the second unit is approximately 10 $\mu$m to 2000 $\mu$m.

The edge of the solid electrolyte layer and the edge of the first unit may be parallel to each other, and

The edge of the solid electrolyte layer and the edge of the second unit may be parallel to each other.

In the preparing of the first unit and the second unit, the first unit and the second unit may not be pressurized.

The pressurizing may be performed under approximately 250 MPa to 500 MPa.

According to the present disclosure, it is possible to simplify the manufacturing process because a cell assembly in which two or more units are stacked is prepared and the cell assembly is pressurized, compared with a manufacturing process in the related art in which basic cell units are pressurized individually and then stacked on one another.

In addition, compared with a cell assembly in the related art in which two or basic cell units each including a current collector, an electrode, and a solid electrolyte layer are stacked, the all-solid-state battery according to one form of the present disclosure is configured such that cell units configured with electrodes are stacked on opposite surfaces of a current collector, thereby reducing the number of current collectors used and thus obtaining an all-solid-state battery having high energy density.

In addition, according to the present disclosure, the solid electrolyte layer having a thickness in a predetermined range and having an area larger than each of a first unit and a second unit is provided, thus it is possible to prevent a short circuit at edges of electrodes.

Effects of the present disclosure are not limited to the effects described above, and the present disclosure includes all effects that can be deduced from the detailed description.

Further areas of applicability will become apparent from the description provided herein. It should be understood that the description and specific examples are intended for purposes of illustration only and are not intended to limit the scope of the present disclosure.

DRAWINGS

In order that the disclosure may be well understood, there will now be described various forms thereof, given by way of example, reference being made to the accompanying drawings, in which:

FIG. 1 is a schematic view illustrating an all-solid-state battery;

FIG. 2 is a schematic view illustrating a first unit;

FIG. 3 is a schematic view illustrating a second unit;

FIG. 4 is a schematic view illustrating a central portion of a solid electrolyte layer;

FIG. 5 is a flowchart illustrating a method of manufacturing an all-solid-state battery;

FIG. 6A is a photograph illustrating whether edges of electrodes of an all-solid-state battery out of a range of $2<\log(x_1 y)<6$ are protected;

FIG. 6B is a photograph illustrating whether edges of electrodes of an all-solid-state battery satisfying the range of $2<\log(x_1 y)<6$ are protected;

FIG. 7A is a photograph of an interface of a middle layer between the second and third stacked units of an all-solid-state battery after pressurization of a cell assembly to 200 MPa; and

FIG. 7B is a photograph of an interface of a middle layer between the second and third stacked units of an all-solid-state battery after pressurization of a cell assembly to 300 MPa.

The drawings described herein are for illustration purposes only and are not intended to limit the scope of the present disclosure in any way.

DETAILED DESCRIPTION

The following description is merely exemplary in nature and is not intended to limit the present disclosure, application, or uses. It should be understood that throughout the drawings, corresponding reference numerals indicate like or corresponding parts and features.

The above and other objectives, features, and advantages of the present disclosure will be more clearly understood from the exemplary forms below when taken in conjunction with the accompanying drawings. The forms of the present disclosure are presented to make complete disclosure of the present disclosure and help those who are ordinarily skilled in the art best understand the present disclosure. Various changes to the following forms are possible and the scope of the present disclosure is not limited to the following forms.

In these drawings, the shapes and sizes of members may be exaggerated for explicit and convenient description. It will be understood that, although the terms first, second, etc. may be used herein to describe various elements, these elements should not be limited by these terms. These terms are only used to distinguish one element, from another element. For instance, a first element discussed below could be termed a second element without departing from the teachings of the present disclosure. Similarly, the second element could also be termed the first element. An element expressed in a singular form in this specification may be plural elements unless it is necessarily singular in the context.

It will be further understood that the terms "comprise", "include", "have", etc. when used in this specification, specify the presence of stated features, integers, steps, operations, elements, components, and/or combinations of them but do not preclude the presence or addition of one or more other features, integers, steps, operations, elements, components, and/or combinations thereof. In addition, it will be understood that, when a layer, a film, a region, or a plate is referred to as being "on" or "under" another layer, another film, another region, or another plate, it can be "directly" or "indirectly" on the other layer, film, region, plate, or one or more intervening layers may also be present.

Unless otherwise indicated, all numbers, values and/or expressions referring to quantities of ingredients, reaction conditions, polymer compositions, and formulations used herein are to be understood as modified in all instances by the term "about" as such numbers are inherently approximations that are reflective of, among other things, the various uncertainties of measurement encountered in obtaining such values. Further, where a numerical range is disclosed herein, such range is continuous, and includes unless otherwise indicated, every value from the minimum value to and including the maximum value of such range. Still further, where such a range refers to integers, unless otherwise indicated, every integer from the minimum value to and including the maximum value is included.

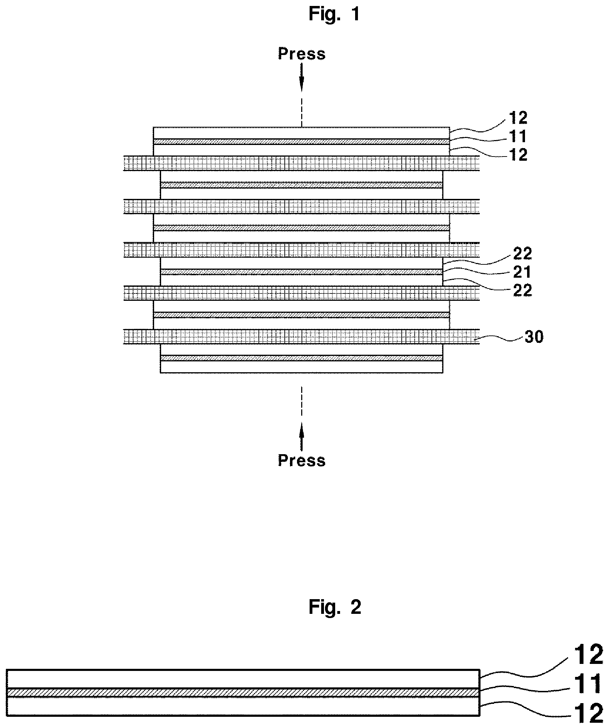

FIG. 1 is a schematic view illustrating an all-solid-state battery 1 according to one form of present disclosure. Referring to FIG. 1, the all-solid-state battery 1 includes: first units 10; second units 20; and solid electrolyte layers 30 disposed between one first unit 10 and one second unit 20. Hereinafter, the all-solid-state battery 1 will be described on the basis of one first unit 10, one second unit 20, and one solid electrolyte layer 30 for the sake of easy explanation.

In a first electrode current collector and a second electrode current collector included in the all-solid-state battery, a first electrode and a second electrode may be a positive electrode or a negative electrode, respectively.

In one form, polarities of the first electrode and the second electrode are different from each other. For example, in the case the first electrode is a positive electrode, the second electrode may be a negative electrode. Alternatively, in the case the first electrode is a negative electrode, the second electrode may be a positive electrode. In another form, the first electrode may be a negative electrode and the second electrode may be a positive electrode.

**First unit**

FIG. 2 is a schematic view illustrating the first unit 10 in one form of the present disclosure. Referring to FIG. 2, the first unit 10 includes: a first electrode current collector 11; and first electrode active material layers 12 provided on opposite surfaces of the first electrode current collector 11. In addition, the first unit may have an area equal to or larger than a second unit.

The first electrode may be a positive electrode or a negative electrode. In the case the first electrode is a negative electrode, the second electrode may be a positive electrode. Alternatively, in the case the first electrode is a positive electrode, the second electrode may be a negative electrode. However, the polarities of the first electrode and the second electrode are not particularly limited. In one form, the first electrode may be a negative electrode.

The first electrode current collector 11 is not particularly limited as long as the first electrode collector 11 is conductive and has a current collecting function. A material of the first electrode current collector 11 may include one kind selected from the group consisting of copper (Cu), copper (Cu) coated with carbon (C), and nickel (Ni). A shape of the first electrode current collector 11 may be, for example, a nickel mesh, a copper foil, or the like.

The first electrode current collector 11 may have a thickness of about 4 $\mu$m to 20 $\mu$m. For example, the thickness of copper (Cu) may be approximately 5 $\mu$m to 15 $\mu$m, the thickness of copper (Cu) coated with carbon (C) may be approximately 7 $\mu$m to 20 $\mu$m, or the thickness of nickel (Ni) may be approximately 4 $\mu$m to 20 $\mu$m.

The first electrode active material layers 12 may include a first electrode active material, a solid electrolyte, a conductive additive, a binder, or the like.

The first electrode active material may be a carbon material such as natural graphite, artificial graphite, graphite carbon fiber, resin sintered carbon, or an alloy material which is compounded with a solid electrolyte. Examples of the alloy material may include lithium alloys such as LiAl, LiZn, $Li_3Bi$, $Li_3Cd$, $Li_3Sb$, $Li_4Si$, $Li_{4.4}Pb$, $Li_{4.4}Sn$, $Li_{0.17}C$, and $LiC_6$, or metal oxides such as lithium titanate ($Li_4Ti_5O_{12}$) and Zn.

The solid electrolyte functions to allow lithium ion transport in the first electrode active material layers 12. The solid electrolyte may be an oxide-based solid electrolyte or a sulfide-based solid electrolyte. However, in another form, a sulfide-based solid electrolyte having high lithium ion conductivity may be used.

The sulfide-based solid electrolyte may be $Li_2S$-$P_2S_5$, $Li_2S$-$P_2S_5$-LiI, $Li_2S$-$P_2S_5$-LiCl, $Li_2S$-$P_2S_5$-LiBr, $Li_2S$-$P_2S_5$-$Li_2O$, $Li_2S$-$P_2S_5$-$Li_2O$-LiI, $Li_2S$-$SiS_2$, $Li_2S$-$SiS_2$-LiI, $Li_2S$-$SiS_2$-LiBr, $Li_2S$-$SiS_2$-LiCl, $Li_2S$-$SiS_2$-$B_2S_3$-LiI, $Li_2S$-$SiS_2$-$P_2S_5$-LiI, $Li_2S$-$B_2S_3$, $Li_2S$-$P_2S_5$-$Z_mS_n$ (where m and n are positive numbers, and Z is one of Ge, Zn, and Ga), $Li_2S$-$GeS_2$, $Li_2S$-$SiS_2$-$Li_3PO_4$, $Li_2S$-$SiS_2$-$Li_xMO_y$ (where x and y are positive numbers, and M is one of P, Si, Ge, B, Al, Ga, and In), $Li_{10}GeP_2S_{12}$, or the like.

The sulfide-based solid electrolyte may have an average particle diameter (D50) of approximately 0.1 $\mu$m to 10 $\mu$m.

In one form, the sulfide-based solid electrolyte having lithium ion conductivity of approximately 1 x $10^{-4}$S/cm or more may be used.

The conductive additive may be carbon black, conducting graphite, ethylene black, graphene, or the like.

The first electrode active material layers 12 may include a binder. A material of the binder may be butadiene rubber (BR), nitrile butadiene rubber (NBR), hydrogenated nitrile butadiene rubber (HNBR), polyvinylidene difluoride (PVDF), polytetrafluoroethylene (PTFE), carboxymethyl cellulose (CMC), or the like, but is not limited thereto.

The first electrode active material layers 12 may have a thickness of approximately 50 $\mu$m to 300 $\mu$m. The first electrode active material layers 12 may have a composite density of approximately 0.1 g/cc to 2.0 g/cc before pressurization and a composite density of approximately 1.2 g/cc to 3.5 g/cc after pressurization. The first electrode active material layers 12 may have a loading level of approximately 10 mg/cm$^2$ to 45 mg/cm$^2$ and brightness index of approximately 30 to 80.

The term 'loading level' used herein indicates a loading amount of substances constituting the first electrode active material layers.

When battery units each including a negative electrode, a positive electrode, and a solid electrolyte are stacked on one another as in the process in the related art, first electrode current collectors are stacked on one another or second electrode current collectors are stacked on one another such that two current collectors are superposed on one another. Therefore, the battery unit stack in the related art has a problem in that many current collectors are used so that energy density thereof is low. On the other hand, one first electrode current collector 11 is disposed between one pair of first electrode active material layers 12 according to one form of the present disclosure. Thus, the number of first electrode current collectors is reduced compared with the process in the related art. As a result, a process of manufacturing all-solid-state batteries can be simplified, and all-solid-state batteries having high energy density can be obtained.

## Second unit

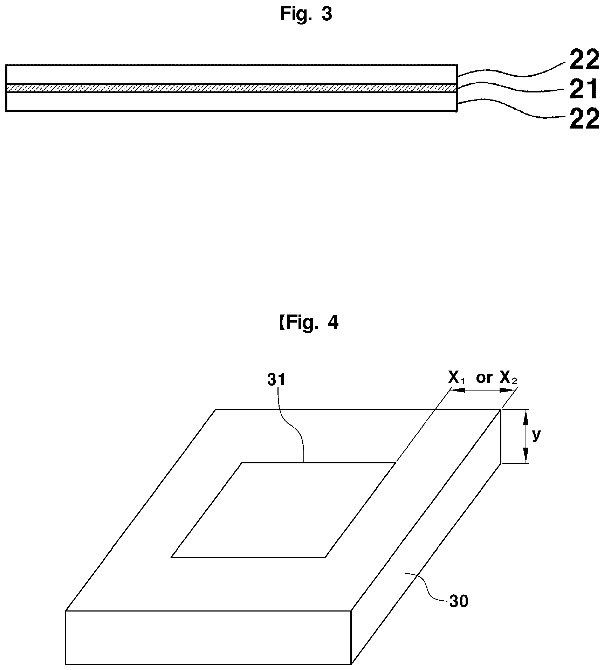

FIG. 3 is a schematic view illustrating a second unit 20 in one form of the present disclosure. Referring to FIG. 3, the second unit 20 includes: a second electrode current collector 21; and second electrode active material layers 22 provided on opposite surfaces of the second electrode current collector 21. In addition, the second unit may have an area equal to or smaller than the first unit.

The second electrode may be a positive electrode or a negative electrode. In the case the second electrode is a positive electrode, the first electrode may be a negative electrode. Alternatively, in the case the second electrode is a negative electrode, the first electrode may be a positive electrode. However, the polarities of the first electrode and the second electrode are not particularly limited. In one form, the second electrode may be a positive electrode.

The second electrode current collector 21 is not particularly limited as long as the second electrode collector 21 is conductive and has a current collecting function.

A material of the second electrode current collector 21 may include aluminium (Al) or aluminium (Al) coated with carbon (C). A shape of the second electrode current collector 21 may be, for example, an aluminium foil or the like.

The second electrode current collector 21 may have a thickness of about 5 $\mu$m to 20 $\mu$m. For example, the thickness of aluminium (Al) may be approximately 5 $\mu$m to 15 $\mu$m, or the thickness of aluminium (Al) coated with carbon (C) may be approximately 7 $\mu$m to 20 $\mu$m.

The second electrode active material layers 22 may include a second electrode active material, a solid electrolyte, a conductive additive, a binder, or the like.

The second electrode active material may be an oxide active material or a sulfide active material.

The oxide active material may be rock salt layered type active materials such as $LiCoO_2$, $LiMnO_2$, $LiNiO_2$, $LiVO_2$, and $Li_{1+x}Ni_{1/3}Co_{1/3}Mn_{1/3}O_2$, spinel active materials such as $LiMn_2O_4$, $Li(Ni_{0.5}Mn_{1.5})O_4$, inverse spinel active materials such as $LiNiVO_4$ and $LiCoVO_4$, olivine active material such as $LiFePO_4$, $LiMnPO_4$, $LiCoPO_4$, and $LiNiPO_4$, Si-containing active materials such as $Li_2FeSiO_4$ and $Li_2MnSiO_4$, rock salt layered type active materials such as $LiNi_{0.8}Co_{(0.2-x)}Al_xO_2$ ($0<x<0.2$) in which some of transition metals are substituted by a dissimilar metal, spinel active materials such as $Li_{1+x}Mn_{2-x-y}M_yO_4$ (where M is at least one selected from Al, Mg, Co, Fe, Ni, and Zn, and $0<x+y<2$) in which some of transition metals are substituted by a dissimilar metal, or lithium titanate such as $Li_4Ti_5O_{12}$.

The sulfide active material may be copper chevrel compound, iron sulfide, cobalt sulfide, nickel sulfide, or the like.

The solid electrolyte may be an oxide-based solid electrolyte or a sulfide-based solid electrolyte. The solid electrolyte may be the same as or different from the solid electrolyte contained in the first electrode active material layers 12.

The conductive additive may be carbon black, conducting graphite, ethylene black, graphene, or the like.

A material of the binder may be butadiene rubber (BR), nitrile butadiene rubber (NBR), hydrogenated nitrile butadiene rubber (HNBR), polyvinylidene difluoride (PVDF), polytetrafluoroethylene (PTFE), carboxymethyl cellulose (CMC), or the like. A material of the binder may be the same as or different from the binder contained in the first electrode active material layers 12.

The second electrode active material layers 22 may have a thickness of approximately 50 $\mu$m to 300 $\mu$m. The second electrode active material layers 22 may have a composite density of approximately 0.5 g/cc to 3.0 g/cc before pressurization and a composite density of approximately 2.5 g/cc to 5.0 g/cc after pressurization. The second electrode active material layers 22 may have a loading level of approximately 10 $mg/cm^2$ to 35 $mg/cm^2$ and brightness index of approximately 40 to 90.

One second electrode current collector 21 is disposed between one pair of second electrode active material layers 22. Thus, like the first electrode current collectors 11, the number of second electrode current collectors is reduced compared with the battery unit stack in the related art. As a result, a process of manufacturing all-solid-state batteries can be simplified, and all-solid-state batteries having high energy density can be obtained.

## Solid electrolyte layer

A solid electrolyte layer 30 in one form of the present disclosure is disposed between the first unit and the second unit so that lithium ions move between the positive and negative electrodes. Referring to FIGS. 1 and 4, one of the first unit and the second unit is seated on one surface of the solid electrolyte layer, and a remaining one of the first unit and the second unit which is different from the one seated on the one surface is seated on the opposite surface of the solid electrolyte. Accordingly, the first electrode active material layer and the second electrode active material layer are stacked in a manner being brought into contact with the solid electrolyte layer.

In one form of the present disclosure, referring to FIG. 4, $x_1$ is a distance between the edge of the solid electrolyte layer and the edge of the first unit, $x_2$ is a distance between the edge of the solid electrolyte layer and the edge of the second unit, and y is a thickness of the solid electrolyte layer. The edge of the solid electrolyte layer and the edge of the first unit may be parallel to each other, and the edge of the solid electrolyte layer and the edge of the second unit may be parallel to each other.

Here, the distance $x_1$ between the edge of the solid electrolyte layer and the edge of the first unit or the distance $x_2$ between the edge of the solid electrolyte layer and the edge of the second unit may be approximately 10 $\mu$m to 2000 $\mu$m, and the thickness y of the solid electrolyte layer may be approximately 10 $\mu$m to 500 $\mu$m. In one form, Equation 1: $2<\log(x_1 y)<6$ or Equation 2: $2<\log(x_2 y)<6$ may be satisfied. When the value of $\log(x_1 y)$ or $\log(x_2 y)$ is less than 2, the probability of occurrence of a short circuit is high because edges of the electrodes may be exposed after a pressurization process. When the value of $\log(x_1 y)$ or $\log(x_2 y)$ is greater than 6, the energy density may be reduced because an unnecessary amount of materials is provided in the all-solid-state battery and thus the volume thereof is increased.

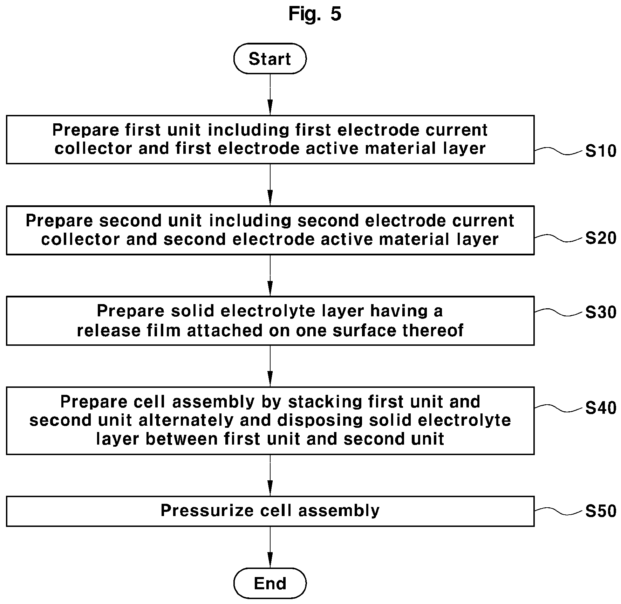

The solid electrolyte layer 30 may include an oxide-based solid electrolyte layer or a sulfide-based solid electrolyte contained in the second electrode active material layers 22. Here, the solid electrolyte may be the same as or different from the solid electrolyte contained in the first electrode active material layers 12.FIG. 5 is a flowchart illustrating a method of manufacturing an all-solid-state battery 1 according to another form of present disclosure. Referring to FIG. 5, the method of manufacturing the all-solid-state battery 1 includes: preparing a first unit including a first electrode current collector 11 and first electrode active material layers 12 (S10); preparing a second unit including a second electrode current collector 21 and second electrode active material layers 22 (S20); preparing a solid electrolyte layer having a release film attached on one surface thereof (S30); stacking the first unit 10 and the second unit 20 alternately and disposing the solid electrolyte layer between the first unit and the second unit to prepare a cell assembly (S40); and pressurizing the cell assembly (S50) .

At the preparing of the first unit (S10), the first electrode active material layers 12 are disposed on opposite surfaces of the first electrode current collector 11. A manner of disposing the first electrode active material layers 12 on the opposite surfaces of the first electrode current collector 11 is not particularly limited. For example, the manner of disposing the first electrode active material layers 12 on the opposite surfaces of the first electrode current collector 11 may be slurry coating process, blasting, aerosol deposition, cold spraying, sputtering, vapor growth, thermal spraying, or the like. In another form, the slurry coating process may be performed.

The slurry coating process may be carried out by preparing a slurry containing a first electrode active material, coating the opposite surfaces of the first electrode current collector 11 with the prepared slurry, and drying the slurry. The process of coating the first electrode current collector with the slurry may be performed by dam-type slurry coating, doctor blading, gravure transfer, reverse roll coating, die coating, or the like.

The slurry containing the first electrode active material may be prepared by mixing the first electrode active material and a solvent, and optionally a solid electrolyte and a binder according to a known method in the related art.

The solvent used to prepare the slurry is not particularly limited as long as the solvent does not adversely affect the performance of the first electrode active material. Examples of the solvent include hydrocarbon-based organic solvent such as heptane, toluene, and hexane. In one form, hydrocarbon-based organic solvent with reduced water content obtained by dehydration process may be used. A first electrode active material, a solid electrolyte, and a binder that are possible to be contained in the slurry containing the first electrode active material may be the above-mentioned materials that are possible to be contained in the first electrode active material layers 12.

At the preparing of the second unit (S20), the second electrode active material layers 22 are disposed on opposite surfaces of the second electrode current collector 21.

A manner of disposing the second electrode active material layers 22 on the opposite surfaces of the second electrode current collector 21 may be the same as the manner of disposing of the first electrode active material layers 12 on the first electrode current collector 12 or may be preparing a metal material capable of lithium oxidation and reduction on the opposite surfaces of the second electrode current collector 21. The metal material may include lithium (Li) or indium (Id).

At the preparing of the solid electrolyte layer (S30), the solid electrolyte layer 30 is prepared by attaching the release film on one surface thereof.

One surface (hereinafter, referred to as a first surface) of the solid electrolyte layer on which the release film is attached may be not limited. At the disposing of the solid electrolyte layer between the first unit and the second unit, the first unit or the second unit may be stacked on the opposite surface (hereinafter, referred to as a second surface) to which the release film is not attached.

The thickness of the solid electrolyte layer 30 may be selected according to desired battery characteristics. The thickness of the solid electrolyte layer 30 may be thin within a range that reduces or minimizes a short circuit between the first electrode active material layers 12 and the second electrode active material layers 22. in one form, the thickness y of the solid electrolyte layer may be approximately 10 $\mu$m to 500 $\mu$m. When the thickness of the solid electrolyte layer is less than approximately 10 $\mu$m, the probability of occurrence of a short circuit is high because edges of the electrodes may be exposed. When the thickness of the solid electrolyte layer is greater than approximately 500 $\mu$m, the solid electrolyte may be broken due to high expansion rate in a planar direction or occupy a large space, thereby reducing energy density. As will be described later, when the thickness of the solid electrolyte layer satisfies Equation 1: $2<\log(x_1 y)<6$ or Equation 2: $2<\log(x_2 y)<6$, it is possible to prevent a short circuit at edges of the electrodes and obtain an all-solid-state battery having high energy density.

The solid electrolyte layer 30 includes a solid electrolyte and may contain a binder as desired. A material of a solid electrolyte that is possible to be contained in the second electrode active material layers 22 may be used as a material of the solid electrolyte layer. When the second electrode active material layers 22 contain a solid electrolyte, the solid electrolyte contained in the solid electrolyte layer 30 and the solid electrolyte contained in the second electrode active material layers 22 may be made of the same material in one form. A material of a binder that is possible to be contained in the first electrode active material layers 12 may be used as a material of the binder of the solid electrolyte layer.

The release film attached to the first surface of the solid electrolyte layer is not limited as long as the release film is highly adhesive. In addition, the release film is not particularly limited as long as the release film is easily removed from the solid electrolyte after stacking of the solid electrolyte layer on the first unit or the second unit because it is difficult to handle the solid electrolyte solely due to physical properties of the solid electrolyte. The release film may include one selected from the group consisting of polyethylene terephthalate (PET), polyimide (PI), polypropylene (PP), polyethylene (PE), and polycarbonate (PC).

At the preparing of the cell assembly (S40), the first unit 10, the second unit 20, and the solid electrolyte layer 30 prepared above are stacked on one another.

The first unit and the second unit are stacked alternately by repeating the following steps: stacking of one of the first unit and the second unit on the second surface of the solid electrolyte layer on which the release film is not attached; removing of the release film from the first surface of the solid electrolyte layer, and stacking a remaining one of the first unit and the second unit on the first surface of the solid electrolyte layer from which the release film is removed, wherein the remaining one is different from the one stacked on the second surface of the solid electrolyte layer.

Specifically, the first unit 10 or the second unit 20 is seated in a central portion 31 of the second surface of the solid electrolyte layer 30 where the release film is not attached. Accordingly, the first electrode active material layers 12 or the second electrode active material layers 22 are stacked on and brought into contact with the solid electrolyte layer 30. Then, a unit different from the unit stacked on the second surface is seated on the central portion 31 of the first surface where the release film of the solid electrolyte layer is removed so that electrode active material layers of the unit seated on the first surface are stacked on and brought into contact with the solid electrolyte layer 30. The above steps may be repeated to alternately stack the first unit, the second unit, and the solid electrolyte layer in a manner placing the solid electrolyte layer between the first unit and the second unit.

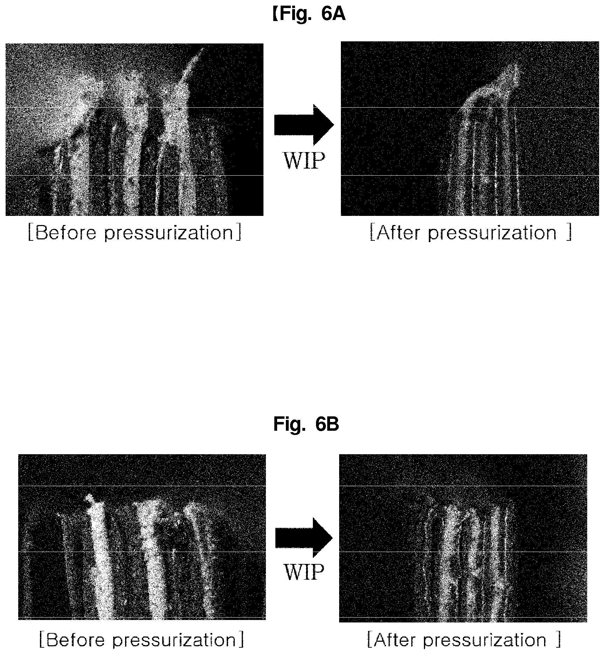

Here, the first unit 10 has an area equal to or larger than the second unit 20, and the central portion 31 of the solid electrolyte layer 30 has an area larger than the second unit 20. Accordingly, referring to FIG. 4, the distance $x_1$ between the edge of the solid electrolyte layer and the edge of the first unit or the distance $x_2$ between the edge of the solid electrolyte layer and the edge of the second unit may be approximately 10 $\mu$m to 2000 $\mu$m. The thickness y of the solid electrolyte layer may be approximately 10 $\mu$m to 500 $\mu$m. In one form, Equation 1: $2<\log(x_1 y)<6$ or Equation 2: $2<\log(x_2 y)<6$ may be satisfied. When the value of $\log(x_1 y)$ or $\log(x_2 y)$ is less than 2, the probability of occurrence of a short circuit is high because edges of the electrodes may be exposed after a pressurization process. When the value of $\log(x_1 y)$ or $\log(x_2 y)$ is greater than 6, the energy density may be reduced because an unnecessary amount of materials is provided in the all-solid-state battery and thus the volume thereof is increased. This can be ensured with reference to FIGS. 6A and 6B. In the case of an all-solid-state battery out of the range of $2<\log(x_1 y)<6$, the probability of occurrence of a short circuit is high because edges of the electrodes may be exposed after the pressurization process as illustrated in FIG. 6A. On the contrary, in the case of an all-solid-state battery satisfying the range of $2<\log(x_1 y)<6$, the solid electrolyte protects edges of the electrodes over the pressurization process and prevents a short circuit.

In addition, in the process in the related art, when battery units each including the first electrode, the second electrode, and the solid electrolyte are stacked on one another, the first electrode current collectors are stacked on one another or the second electrode current collectors are stacked on one another such that two current collectors are superposed on one another. As a result, it is difficult to obtain an all-solid-state battery having high energy density because many current collectors are used. On the contrary, in the present disclosure, since one first electrode current collector or one second electrode current collector which is approximately 4 $\mu$m to 20 $\mu$m in thickness is disposed between one pair of first electrode active material layers or one pair of second electrode active material layers, the number of current collectors is reduced compared with the process in the related art. As a result, a process of manufacturing all-solid-state batteries can be simplified, and all-solid-state batteries having high energy density can be obtained.

The first electrode unit, the second electrode unit, and the solid electrolyte layer may be stacked on one another and configured into a jelly-roll structure or the like.

At the pressurizing of the cell assembly (S50), the prepared cell assembly is pressurized to obtain an all-solid-state battery.

A method of pressurizing the cell assembly may be flat pressing, ultra high pressure isostatic pressing, uniaxial pressing, cold isostatic pressing (CIP), or hot pressing. In one form, the pressuring method may be flat pressing or ultra high pressure isostatic pressing.

Conventionally, basic cell units are pressurized individually and then stacked on one another. However, the present disclosure simplifies the process because a final cell assembly is prepared and then pressurized.

When a cell assembly in which five units are stacked was pressurized to 200 MPa, failure occurred on an interface of the cell assembly. However, when the cell assembly was pressurized to 300 MPa, there was no failure on the interface. Therefore, in order to manufacture an all-solid-state battery in which cells operate without malfunction, the pressurization may be performed under the condition of 250 MPa to 500 MPa.

Hereinbelow, the present disclosure will be described more specifically with reference to exemplary forms. The forms are merely illustrative of the present disclosure, and thus it should be understood that the scope and spirit of the present disclosure are not limited to this.

**Form**

(S10) Copper (Cu), copper (Cu) coated with carbon (C), or nickel (Ni) was used as a negative electrode current collector in a thickness of approximately 5 $\mu$m to 15 $\mu$m, 7 $\mu$m to 20 $\mu$m, or 4 $\mu$m to 20 $\mu$m, respectively. A slurry for preparing a negative electrode active material layer was prepared by using a graphite-based negative electrode active material, a butyrate-based solvent, a sulfide-based solid electrolyte, and a rubber binder. Negative electrode active material layers were formed on opposite surfaces of the negative electrode current collector through slurry coating process such that a first unit was prepared. Here, a composite density of the negative electrode active material was approximately 0.5 g/cc to 3.0 g/cc.

(S20) Aluminium (Al) or aluminium (Al) coated with carbon (C) may be used as a positive electrode current collector in a thickness of approximately 5 $\mu$m to 15 $\mu$m or 7 $\mu$m to 20 $\mu$m, respectively. A slurry for preparing a positive electrode active material layer was prepared by using a nickel-cobalt-manganese-based (NCM) positive electrode active material, a butyrate-based solvent, a sulfide-based solid electrolyte, and a rubber binder. Positive electrode active material layers were formed on opposite surfaces of the positive electrode current collector through slurry coating process such that a second unit was prepared. Here, a composite density of the positive electrode active material was approximately 0.1 g/cc to 2.0 g/cc.

(S30) A solid electrolyte layer was prepared using a sulfide-based solid electrolyte and a rubber binder. Then, a PI film was used as a release film and attached on a first surface of the solid electrolyte layer.

(S40) A cell assembly was obtained by stacking the first unit and the second unit. Specifically, the first unit 10 or the second unit 20 was seated in a central portion 31 of a second surface of the solid electrolyte layer 30 where the release film was not attached. Accordingly, the first electrode active material layers 12 or the second electrode active material layers 22 were stacked on and brought into contact with the solid electrolyte layer 30. Then, a unit different from the unit stacked on the second surface was seated on the central portion 31 of the first surface where the release film of the solid electrolyte layer was removed so that electrode active material layers of the unit seated on the first surface were stacked on and brought into contact with the solid electrolyte layer. The above steps were repeated to alternately stack the first unit, the second unit, and the solid electrolyte layer in a manner placing the solid electrolyte layer between the first unit and the second unit.

(S50) The cell assembly was pressurized such that the negative electrode active material layers and the positive electrode active material layers were reduced in thickness of 50 $\mu$m to 300 $\mu$m.

**Experimental Example 1** - **Setting of Pressurization Range**

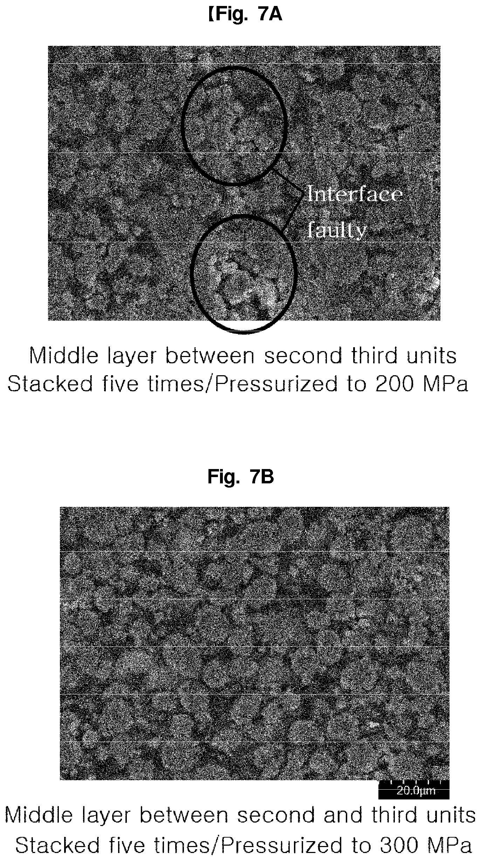

In order to manufacture an all-solid-state battery according to one form of the present disclosure, an experiment on the optimal pressurization range was performed. The results are illustrated in FIGS. 7A and 7B.

FIG. 7A is a photograph of an interface of a middle layer between the second and third stacked units after pressurization of a cell assembly to 200 MPa, the cell assembly being prepared by performing alternate stacking of the first unit and the second unit five times (including the solid electrolyte layer between the units) in one form. FIG. 7B is a photograph of an interface of middle layers between the second and third stacked units after pressurization of a cell assembly to 300 MPa, the cell assembly being prepared by performing alternate stacking of the first unit and the second unit 5 times (including the solid electrolyte layer between the units) according to one form of the present disclosure.

Referring to FIG. 7A, it was confirmed that failure occurred on the interface of the all-solid-state battery manufactured by pressurizing the cell assembly to 200 MPa, and only 70% of actual cell performance was expressed. On the contrary, referring to FIG. 7B, it was confirmed that there was no failure on the interface of the all-solid-state battery manufactured by pressurizing the cell assembly to 300 MPa, and 95% or more of actual cell performance was expressed.

As a result, in order to manufacture an all-solid-state battery operating without malfunction through the form of the present disclosure, it was confirmed that pressurization of 300 MPa or more on the cell assembly is desired for the cell assembly in which the first unit and the second unit are stacked 5 times.

Although the form of the present disclosure has been described with reference to the accompanying drawings, those skilled in the art will appreciate that various modifications, additions and substitutions are possible, without departing from the scope and spirit of the present disclosure. Therefore, the disclosed forms of the present disclosure are only for illustrative purposes and should not be construed as limiting the present disclosure.

**Claims**

1. An all-solid-state battery, comprising:

   a plurality of first units each including a first electrode current collector and a first electrode active material layer provided on each of opposite surfaces of the first electrode current collector; and
   a plurality of second units each including a second electrode current collector and a second electrode active material layer provided on each of opposite surfaces of the second electrode current collector,
   wherein first units of the plurality of first units and second units of the plurality of second units are alternately stacked on one another;
   a plurality of solid electrolyte layers, wherein a solid electrolyte layer of the plurality of solid electrolyte layers is disposed between a corresponding first unit among the plurality of first units and a corresponding second unit among the plurality of second units, and
   each solid electrolyte layer of the plurality of solid electrolyte layers has an area larger than each of the first units and equal to or larger than each of the second units.

2. The all-solid-state battery of claim 1, wherein the corresponding first unit has an area equal to or larger than the corresponding second unit, and
   wherein a central portion of the solid electrolyte layer has an area equal to or larger than the corresponding first unit or the corresponding second unit.

3. The all-solid-state battery of claim 1 or 2, wherein one of the corresponding first unit and second unit is seated on one surface of the solid electrolyte layer, and a remaining one of the corresponding first unit and second unit which is different from the one seated on the one surface is seated on an opposite surface of the solid electrolyte layer such that the first electrode active material layer and the second electrode active material layer are stacked to contact with the solid electrolyte layer.

4. The all-solid-state battery of any one of claims 1 to 3, wherein the all-solid-state battery is configured to satisfy Equation 1 or Equation 2 below:

$$\text{Equation 1: } 2 < \log(x_1 y) < 6$$

$$\text{Equation 2: } 2 < \log(x_2 y) < 6$$

wherein $x_1$ is a distance between an edge of the solid electrolyte layer and an edge of the first unit, $x_2$ is a distance between the edge of the solid electrolyte layer and an edge of the second unit, and y is a thickness of the solid electrolyte layer.

5. The all-solid-state battery of any one of claims 1 to 4, wherein a thickness (y) of the solid electrolyte layer is approximately 10 $\mu$m to 500 $\mu$m.

6. The all-solid-state battery of any one of claims 1 to 5, wherein a distance ($x_1$) between an edge of the solid electrolyte layer and an edge of the corresponding first unit, or a distance ($x_2$) between the edge of the solid electrolyte layer and an edge of the corresponding second unit is approximately 10 $\mu$m to 2000 $\mu$m, and
   wherein the edge of the solid electrolyte layer and the edge of the corresponding first unit are parallel to each other, and
   the edge of the solid electrolyte layer and the edge of the corresponding second unit are parallel to each other.

7. The all-solid-state battery of any one of claims 1 to 6, wherein the first electrode current collector of the corresponding first unit has a thickness of approximately 4 $\mu$m to 20 $\mu$m and is disposed between a pair of first electrode active material layers of the corresponding first unit, and
   wherein the second electrode current collector of the corresponding second unit has a thickness of approximately 5 $\mu$m to 20 $\mu$m and is disposed between a pair of second electrode active material layers of the corresponding second unit.

8. The all-solid-state battery of any one of claims 1 to 7, wherein the first electrode active material layer of the corresponding first unit has a thickness of approximately 50 $\mu$m to 300 $\mu$m, a composite density of approximately 1.2 g/cc to 3.5 g/cc, a loading level of approximately 10 mg/cm$^2$ to 45 mg/cm$^2$, and a brightness index of approximately 30 to 80, and
   wherein the second electrode active material layer of the corresponding second unit has a thickness of approximately 50 $\mu$m to 300 $\mu$m, a composite density of approximately 2.5 g/cc to 5.0 g/cc, a loading level of approximately 10 mg/cm$^2$ to 35 mg/cm$^2$, and a brightness index of approximately 40 to 90.

9. A method of manufacturing an all-solid-state battery, the method comprising:

   preparing multiple first units each including a first electrode current collector and a first electrode active material layer provided on each of opposite surfaces of the first electrode current collector;

preparing multiple second units each including a second electrode current collector and a second electrode active material layer provided on each of opposite surfaces of the second electrode current collector;

preparing a cell assembly by alternately stacking first units of the multiple first units and second units of the multiple second units on one another; and

pressurizing the cell assembly,

wherein preparing the cell assembly further includes:

disposing a solid electrolyte layer between a first unit of the first units and a second unit of the second units, wherein the solid electrolyte layer has a release film on a first surface thereof, and

wherein the solid electrolyte layer has an area larger than any of the first unit and each of the second unit.

10. The method of claim 9, wherein disposing the solid electrolyte layer includes:

stacking one unit among the first unit and the second unit on a second surface of the solid electrolyte layer to which the release film is not attached;

removing the release film from the first surface of the solid electrolyte layer; and

stacking a remaining unit, among the first unit and the second unit, on the first surface from which the release film is removed.

11. The method of claim 9 or 10, further comprising: arranging the solid electrolyte layer, first unit and the second unit to satisfy Equation 1 or Equation 2:

$$\text{Equation 1: } 2 < \log(x_1 y) < 6,$$

$$\text{Equation 2: } 2 < \log(x_2 y) < 6$$

wherein $x_1$ is a distance between an edge of the solid electrolyte layer and an edge of the first unit, $x_2$ is a distance between the edge of the solid electrolyte layer and an edge of the second unit, and $y$ is a thickness of the solid electrolyte layer.

12. The method of any one of claims 9 to 11, wherein a thickness $(y)$ of the solid electrolyte layer is approximately 10 $\mu$m to 500 $\mu$m.

13. The method of any on of claims 9 to 12, wherein a distance $(x_1)$ between an edge of the solid electrolyte layer and an edge of the first unit or a distance $(x_2)$ between the edge of the solid electrolyte layer and an edge of the second unit is approximately 10 $\mu$m to 2000 $\mu$m,

wherein the edge of the solid electrolyte layer and the edge of the first unit are parallel to each other, and the edge of the solid electrolyte layer and the edge of the second unit are parallel to each other.

14. The method of any of claim 9 to 13, wherein the pressurizing is performed under approximately 250 MPa to 500 MPa, and

wherein, in preparing the first unit and the second unit, the first unit and the second unit are not pressurized.

## Fig. 1

Press

12
11
12

22
21
22

30

Press

## Fig. 2

12
11
12

**Fig. 3**

**[Fig. 4**

# Fig. 5

```
                    ( Start )
                        |
                        v
+--------------------------------------------------+
|  Prepare first unit including first electrode    |
|  current collector and first electrode active    |
|  material layer                                  |  ~~ S10
+--------------------------------------------------+
                        |
                        v
+--------------------------------------------------+
|  Prepare second unit including second electrode  |
|  current collector and second electrode active   |
|  material layer                                  |  ~~ S20
+--------------------------------------------------+
                        |
                        v
+--------------------------------------------------+
|  Prepare solid electrolyte layer having a        |  ~~ S30
|  release film attached on one surface thereof    |
+--------------------------------------------------+
                        |
                        v
+--------------------------------------------------+
|  Prepare cell assembly by stacking first unit    |
|  and second unit alternately and disposing solid |  ~~ S40
|  electrolyte layer between first unit and        |
|  second unit                                     |
+--------------------------------------------------+
                        |
                        v
+--------------------------------------------------+
|  Pressurize cell assembly                        |  ~~ S50
+--------------------------------------------------+
                        |
                        v
                    ( End )
```

[Fig. 6A

[Before pressurization]　　　　　WIP　　　　　[After pressurization ]

Fig. 6B

[Before pressurization]　　　　　WIP　　　　　[After pressurization ]

[Fig. 7A

Middle layer between second third units
Stacked five times/Pressurized to 200 MPa

Fig. 7B

Middle layer between second and third units
Stacked five times/Pressurized to 300 MPa

Europäisches
Patentamt

European
Patent Office

Office européen
des brevets

# EUROPEAN SEARCH REPORT

Application Number

EP 19 20 1901

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/309163 A1 (KIM HO SUNG [KR] ET AL) 25 October 2018 (2018-10-25) * paragraph [0008] * * claim 7; figure 13 * | 1-14 | INV. H01M10/0562 H01M10/0525 H01M10/0585 H01M4/04 H01M10/04 |
| X | US 2018/226652 A1 (MORI MASAHIRO [JP] ET AL) 9 August 2018 (2018-08-09) * paragraph [0049] * * paragraph [0045]; figure 1 * | 1-14 | |
| A | US 2016/329602 A1 (KOJIMA SHINJI [JP]) 10 November 2016 (2016-11-10) * paragraph [0147] - paragraph [0148] * * paragraph [0153] - paragraph [0155] * | 9-14 | |
| A | WO 2019/078001 A1 (NIPPON ELECTRIC GLASS CO [JP]) 25 April 2019 (2019-04-25) * paragraph [0029] * * paragraph [0031] - paragraph [0032] * * figure 9 * | 1-6 | |
| A | US 2012/216394 A1 (KITAURA MASAYUKI [JP] ET AL) 30 August 2012 (2012-08-30) * paragraph [0010] * * paragraph [0029]; figures 1,2,5 * * paragraph [0066] * * paragraph [0055] * * paragraph [0057] * * paragraph [0065] * | 1-14 | TECHNICAL FIELDS SEARCHED (IPC) H01M |

The present search report has been drawn up for all claims

| Place of search | Date of completion of the search | Examiner |
|---|---|---|
| Munich | 24 April 2020 | Tylus, Urszula |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 19 20 1901

This annex lists the patent family members relating to the patent documents cited in the above-mentioned European search report.
The members are as contained in the European Patent Office EDP file on
The European Patent Office is in no way liable for these particulars which are merely given for the purpose of information.

24-04-2020

| Patent document cited in search report | | Publication date | Patent family member(s) | | Publication date |
|---|---|---|---|---|---|
| US 2018309163 | A1 | 25-10-2018 | JP 2018186074 A | | 22-11-2018 |
| | | | US 2018309163 A1 | | 25-10-2018 |
| US 2018226652 | A1 | 09-08-2018 | CN 108417883 A | | 17-08-2018 |
| | | | EP 3361529 A1 | | 15-08-2018 |
| | | | JP 2018129222 A | | 16-08-2018 |
| | | | US 2018226652 A1 | | 09-08-2018 |
| US 2016329602 | A1 | 10-11-2016 | CN 106129446 A | | 16-11-2016 |
| | | | DE 102016108401 A1 | | 10-11-2016 |
| | | | JP 6287946 B2 | | 07-03-2018 |
| | | | JP 2016213070 A | | 15-12-2016 |
| | | | KR 20160131907 A | | 16-11-2016 |
| | | | US 2016329602 A1 | | 10-11-2016 |
| WO 2019078001 | A1 | 25-04-2019 | NONE | | |
| US 2012216394 | A1 | 30-08-2012 | CN 102598391 A | | 18-07-2012 |
| | | | JP 5382130 B2 | | 08-01-2014 |
| | | | JP WO2011052094 A1 | | 14-03-2013 |
| | | | US 2012216394 A1 | | 30-08-2012 |
| | | | WO 2011052094 A1 | | 05-05-2011 |

EPO FORM P0459

For more details about this annex : see Official Journal of the European Patent Office, No. 12/82